# EUROPÄISCHE PATENTANMELDUNG

(11) **EP 4 378 762 A1**
(43) Veröffentlichungstag der Anmeldung: **05.06.2024**
(21) Anmeldenummer: 23213855.2
(22) Anmeldetag: 03.12.2023
(51) Int. Cl.: B60R 15/02

(54) **FREIZEITFAHRZEUG UND NASSZELLENEINRICHTUNG**

(30) Priorität: 02.12.2022 DE 102022131926
(71) Anmelder: Bürstner GmbH & CO. KG, 77694 Kehl (DE)
(72) Erfinder: Schmiederer, Rolf, 77728 Oppenau (DE); Host, Damien, 67201 Eckbolsheim (FR)
(74) Vertreter: Müller Schupfner & Partner Patent- und Rechtsanwaltspartnerschaft mbB (Muc)

(57) **Zusammenfassung**

Nasszelleneinrichtung (3) für ein Freizeitfahrzeug (1), wobei ein Bodenelement (4) und zumindest eine Wand (5, 6, 7) mit zumindest einem Dichtbereich (8, 9, 10) vorgesehen sind und wobei zwischen dem zumindest einen Dichtbereich (8, 9, 10) der zumindest einen Wand (5, 6, 7) und dem Bodenelement (4) eine Abdichtung vorgesehen ist. Vorgeschlagen wird, dass in dem zumindest einen Dichtbereich (8, 9, 10) der zumindest einen Wand (5, 6, 7) und/oder in dem zumindest einem Bodenelement (4) zumindest eine Aussparung (11, 12) ausgestaltet ist, dass in die zumindest eine Aussparung (11, 12) zumindest ein Dichtelement (15) eingelegt ist und dass die Abdichtung zwischen dem zumindest einen Dichtbereich (8, 9, 10) der zumindest einen Wand (5, 6, 7) und dem Bodenelement (4) zumindest im Wesentlichen durch das zumindest eine Dichtelement (15) gebildet ist. Ferner ist ein Freizeitfahrzeug mit solch einer Nasszelleneinrichtung (1) angegeben.

## Beschreibung

Die Erfindung betrifft ein Freizeitfahrzeug und eine Nasszelleneinrichtung. Die Nasszelleneinrichtung kann beispielsweise eine Duscheinrichtung einer Nasszelle sein. Speziell betrifft die Erfindung das Gebiet der Wohnmobile und Wohnwagen.

Aus der DE 20 2011 004 586 U1 ist ein Wohnmobil mit einer Nasszelle bekannt. Die bekannte Nasszelle weist eine Dusche und ein WC auf.

Bei einem Wohnmobil, wie es aus der DE 20 2011 004 586 U1 bekannt ist, kann die Dusche eine Duschwanne und mehrere Wände aufweisen. Hierbei ist eine Abdichtung zwischen der Duschwanne und den Wänden vorgesehen.

Bei einer Nasszelle für ein Freizeitfahrzeug ist es denkbar, dass die Duschwanne zu mehreren Seiten, insbesondere drei Seiten, mit einer pastösen Dichtmasse, insbesondere Silikon, abgedichtet ist. Hierbei handelt es sich um Wartungsfugen, so dass nach einiger Zeit ein aufwändiger Austausch erforderlich ist. Durch die Erschütterungen im Betrieb wird diese Problematik verschärft. Außerdem ist die Verarbeitung einer pastösen Dichtmasse aufwändig, da in der Fertigung dann insbesondere Wartezeiten einzuhalten sind. Gegebenenfalls ist die bei der Montage zur Verfügung stehende Zeit für ein Trocknen der pastösen Dichtmasse nicht ausreichend, so dass dieser Prozess nicht in der Fertigung genutzt werden kann.

Bei einer Nasszelle für ein Freizeitfahrzeug ist es auch denkbar, dass bei einer alternativen Ausführung in einen vertikalen Rand der Duschwanne vertikale Paneele geführt sind, die mit dem vertikalen Rand eine Überlappung bilden. Durch die Überlappung kann die Abdichtung gebildet werden. Die Paneele sind mit den Wänden der Nasszelle verbunden. Dies hat den Nachteil, dass zusätzliche Teile, insbesondere die Paneele, erforderlich sind. Die Paneele erhöhen außerdem das Gewicht des Freizeitfahrzeugs.

Eine Aufgabe der vorliegenden Erfindung ist es, eine Nasszelleneinrichtung und ein Freizeitfahrzeug anzugeben, die in verbesserter Weise ausgestaltet sind. Insbesondere kann eine Aufgabe der Erfindung darin bestehen, eine bessere Herstellung der Nasszelleneinrichtung und/oder des Freizeitfahrzeugs zu ermöglichen. Eine Aufgabe der Erfindung kann auch darin bestehen, zumindest eine Nasszelle und ein Freizeitfahrzeug anzugeben, bei denen eine Abdichtung der Nasszelleneinrichtung verbessert ist und diese insbesondere eine verbesserte Lebensdauer aufweist.

Diese Aufgaben können durch eine Nasszelleneinrichtung mit den Merkmalen des unabhängigen Patentanspruchs 1 und durch ein Freizeitfahrzeug mit den Merkmalen des Patentanspruchs 10 gelöst werden. Vorteilhafte Weiterbildungen der Erfindung sind in den Unteransprüchen angegeben.

Die Aufgabe wird durch eine Nasszelleneinrichtung für ein Freizeitfahrzeug gelöst, wobei ein Bodenelement und zumindest eine Wand mit zumindest einem Dichtbereich vorgesehen sind, wobei zwischen dem zumindest einen Dichtbereich der zumindest einen Wand und dem Bodenelement eine Abdichtung vorgesehen ist, wobei in dem zumindest einen Dichtbereich der zumindest einen Wand und/oder in dem zumindest einem Bodenelement zumindest eine Aussparung ausgestaltet ist, wobei in die zumindest eine Aussparung zumindest ein Dichtelement eingelegt ist und wobei die Abdichtung zwischen dem zumindest einen Dichtbereich der zumindest einen Wand und dem Bodenelement zumindest im Wesentlichen durch das zumindest eine Dichtelement gebildet ist.

Ferner wird die Aufgabe durch ein Freizeitfahrzeug, insbesondere ein Wohnmobil oder einen Wohnwagen, mit zumindest einer solchen Nasszelleneinrichtung gelöst.

Die Nasszelleneinrichtung kann gegebenenfalls auch unabhängig von einem Freizeitfahrzeug hergestellt und vertrieben werden.

Vorteilhaft ist es, dass mehrere Aussparungen der Dichtbereiche mehrerer Wände aneinander anschließend angeordnet sind und dass ein Dichtelement in diese mehreren Aussparungen eingelegt ist. Hierdurch können sich die mehreren Aussparungen auch zu einer zumindest im Wesentlichen ohne Übergänge zwischen den Dichtbereichen verlaufenden Dichtelementaufnahme zusammenfügen, in die das Dichtelement eingelegt ist. Damit wird eine optimierte Abdichtung ermöglicht. Außerdem vereinfacht sich die Herstellung.

Vorteilhaft ist es, dass die Aussparungen der Dichtbereiche mehrerer Wände zumindest im Wesentlichen U-förmig angeordnet sind und dass das Dichtelement zumindest im Wesentlichen U-förmig in diese Aussparungen eingelegt ist. Hierbei können drei Seiten abgedichtete werden. An der offenen Seite kann dann ein Zugang erfolgen, wobei eine Tür angebracht sein kann, die insbesondere schwenkbar oder faltbar sein kann. Es kann aber auch ein Vorhang, insbesondere ein Duschvorhang, vorgesehen sein.

Vorteilhaft ist es, dass an zumindest einem Ende zumindest einer Aussparung diese Aussparung einen L-förmigen ausgestalteten Abschluss aufweist und dass das Dichtelement, das in diese Aussparung eingelegt ist, einen L-förmige ausgestalteten Endabschnitt aufweist, der in den L-förmig ausgestalteten Abschluss der Aussparung eingelegt ist. Hierdurch kann eine verbesserte Befestigung des Dichtelements in der Aussparung erfolgen. Es kann auch erreicht werden, dass das Dichtelement entlang der Aussparung betrachtet stets bis zum Endabschnitt verlegt ist, so dass dort eine zuverlässige Dichtwirkung über die Lebensdauer erzielt ist.

Vorteilhaft ist es, dass zumindest ein Dichtelement, das in eine Aussparung eingelegt ist, so in diese Aussparung eingelegt ist, dass es zumindest im entspannten Zustand des Dichtelements teilweise aus dieser Aussparung ragt. Vor der Montage kann das Dichtelement hierfür im entspannten Zustand höher ausgestaltet sein als es diesbezüglich die Aussparung ist. Die Aussparung ist also weniger tief ausgeführt als das Dichtelement hoch ist.

Vorteilhaft ist es, dass das Bodenelement zumindest teilweise als Duschwanne ausgebildet ist. Dadurch kann eine Duscheinheit realisiert werden.

Vorteilhaft ist es, dass die zumindest eine Wand und das Bodenelement miteinander verbunden, insbesondere lösbar miteinander verbunden, sind. Hierdurch kann das Dichtelement durch Verschrauben vorgespannt werden, so dass sich eine hohe Dichtwirkung ergibt. Außerdem ergibt sich eine verbesserte Montage, bei der insbesondere Wartezeiten entfallen.

Vorteilhaft ist es, dass ein Rand des Bodenelements zumindest teilweise in eine von mehreren Dichtbereichen mehrerer Wände gebildete Umfassung eingesetzt ist und/oder dass zumindest eine Aussparung einer Wand zu einer Stirnseite dieser Wand hin geöffnet ist. Hierdurch kann eine vorteilhafte gleichmäßige Vorspannung des Dichtelements erzielt werden, die über die Lebensdauer zumindest im Wesentlichen gewährleistet werden kann.

Vorteilhaft ist es, dass die Nasszelleneinrichtung als Teil einer Nasszelle ausgebildet ist und/oder dass die Nasszelleneinrichtung als Duscheinrichtung ausgebildet ist und/oder dass die Nasszelleneinrichtung zumindest teilweise zumindest eine Wand und einen Nasszellenboden einer Nasszelle ausgebildet. Hierbei kann die vorgeschlagene Ausgestaltung auch mehrmals zum Einsatz kommen. Insbesondere können sowohl Außenwände der Nasszelle als auch Innenwände beziehungsweise Trennwände in der Nasszelle auf diese Weise mit einer zuverlässigen Abdichtung versehen werden. Ferner können auch Eckverbindungen an Wänden, insbesondere an Duschraumwänden, auf diese Weise abgedichtet werden. Hierbei kann die Abdichtung zwischen einer Wand und einem Bodenelement in entsprechender Weise für eine Abdichtung zwischen einer Wand und einer weiteren Wand genutzt werden. Hierauf kann auch ein unabhängiger Anspruch gerichtet werden.

In vorteilhafter Weise kann die Abdichtung von dem Bodenelement, insbesondere der Duschwanne, zu den Wänden mit einem als Trockendichtung ausgebildeten Dichtelement realisiert werden. Das Dichtelement kann als Dichtschnur realisiert werden, die insbesondere zumindest im Wesentlichen aus Moosgummi ausgebildet sein kann. Die Aussparung kann als Nut ausgebildet sein. Die Wände können gegebenenfalls gefälzt und von unten genutet sein.

Somit kann eine Ausgestaltung realisiert werden, bei der im Vergleich zu einer herkömmlichen Ausgestaltung zusätzliche Teile, wie Paneele, eingespart werden können. Ferner wird kein Dichtstoff benötigt, bei dem eine Wartezeit berücksichtigt werden muss.

Weitere Vorteile und Einzelheiten der Erfindung werden anhand des in den schematischen Figuren dargestellten Ausführungsbeispiels näher erläutert. Hierbei zeigen:
- Fig. 1: eine Nasszelleneinrichtung für ein Freizeitfahrzeug in einer auszugsweisen, schematischen Ansicht entsprechend einem Ausführungsbeispiel, wobei unter anderem eine Sicht auf die Unterseite dargestellt ist und ein Bodenelement fortgelassen ist;
- Fig. 2: den in Fig. 1 mit II bezeichneten Ausschnitt der Nasszelleneinrichtung im Detail, wobei eine Aussparung einer Wand gezeigt ist;
- Fig. 3: die in Fig. 1 dargestellte Nasszelleneinrichtung, wobei ein als Duschwanne ausgebildetes Bodenelement montiert ist;
- Fig. 4: die in Fig. 3 dargestellte Nasszelleneinrichtung, wobei zusätzlich zu dem als Duschwanne ausgebildeten Bodenelement ein Duschkabinenboden montiert ist;
- Fig. 5: den in Fig. 2 gezeigten Ausschnitt, wobei das Dichtelement in die Aussparung der Wand eingelegt ist;
- Fig. 6: den in Fig. 1 mit VI bezeichneten Ausschnitt des Dichtbereichs einer Wand, wobei das Dichtelement in die Aussparung im Dichtbereich der Wand eingelegt ist;
- Fig. 7: einen auszugsweisen Schnitt durch eine Wand der in Fig. 2 gezeigten Nasszelleneinrichtung entlang der mit VII bezeichneten Schnittebene, wobei eine Vertiefung, in die das Bodenelement eingesetzt ist, und eine Aussparung, in die das Dichtelement einlegbar ist, dargestellt sind;
- Fig. 8: eine auszugsweise, schematische Darstellung einer Abdichtung zwischen einer Wand und einem Bodenelement entsprechend der in Fig. 7 gezeigten Ansicht im montierten Zustand, wobei unter anderem die Wand, das Bodenelement und das eingelegte Dichtelement gezeigt sind; und
- Fig. 9: ein Freizeitfahrzeug in einer schematischen, teilweise geöffneten Seitenansicht zur Veranschaulichung der Erfindung.

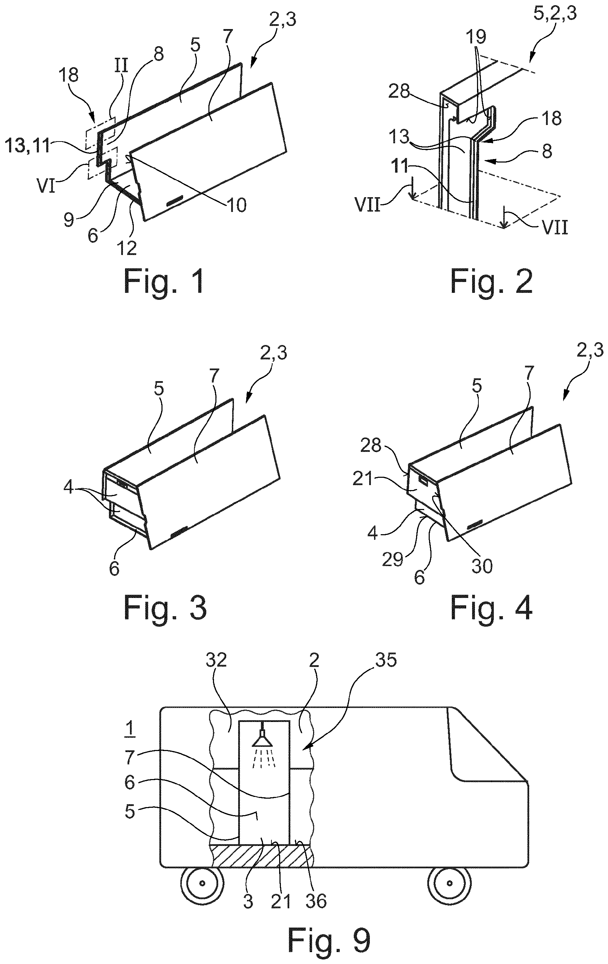

Fig. 1 zeigt eine Einrichtung für ein Freizeitfahrzeug 1 (Fig. 9), die als Teil einer Nasszelle 2, insbesondere als Nasszelleneinrichtung 3, ausgebildet sein kann. Die Nasszelleneinrichtung 3 ist hierbei in einer auszugsweisen, schematischen Ansicht entsprechend einem Ausführungsbeispiel dargestellt, wobei unter anderem eine Sicht auf die Unterseite der Nasszelleneinrichtung 3 dargestellt ist und ein Bodenelement 4 (Fig. 4) fortgelassen ist. Das Freizeitfahrzeug 1 kann insbesondere als Wohnmobil oder Wohnwagen ausgebildet sein. Die Nasszelleneinrichtung 3 dient besonders für solche Freizeitfahrzeuge 1.

Die Nasszelleneinrichtung 3 umfasst ein Bodenelement 4 (Fig. 3) und Wände 5, 6, 7. Die Wände 5, 6, 7 weisen jeweils einen Dichtbereich 8, 9, 10 auf. Im montierten Zustand ist zwischen den Dichtbereichen 8, 9, 10 der Wände 5, 6, 7 und dem Bodenelement 4 eine Abdichtung vorgesehen. Eine mögliche Ausgestaltung solch einer Abdichtung ist auch im folgenden weiter beschrieben.

Hierbei ist in jedem der Dichtbereiche 8, 9, 10 eine Aussparung 11, 12 ausgestaltet, wobei eine nicht dargestellte Aussparung in dem Dichtbereich 10 der Wand 7 zumindest teilweise spiegelsymmetrisch zu der Aussparung 11 in der Wand 5 ausgeführt sein kann. Bei einer abgewandelten Ausgestaltung kann zusätzlich oder alternativ auch in dem Bodenelement 4 eine Aussparung ausgestaltet sein.

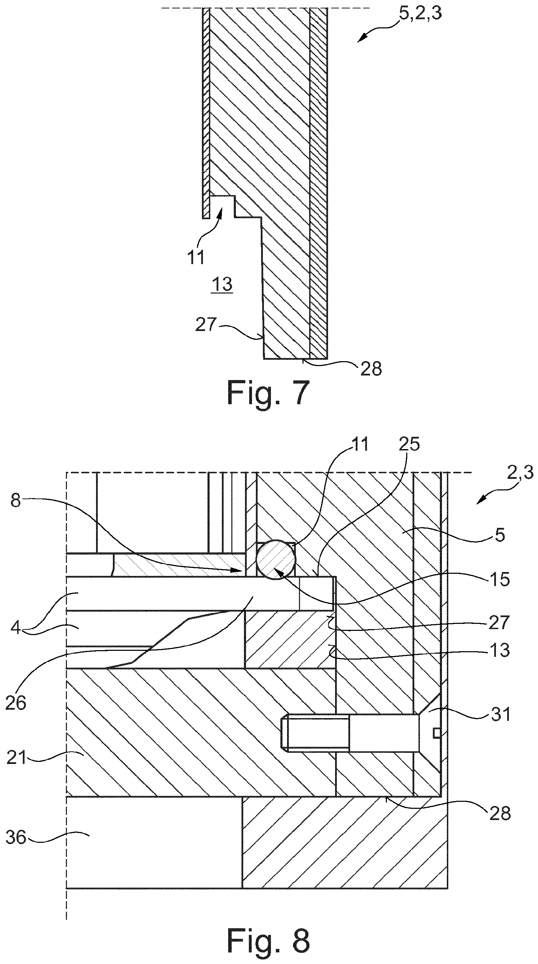

In diesem Ausführungsbeispiel ist in die Aussparungen 11, 12 der Wände 5, 6, 7 ein Dichtelement 15 eingelegt. Dadurch ist die Abdichtung zwischen den Dichtbereichen 8, 9, 10 der Wände 5, 6, 7 und dem Bodenelement 4 gebildet. Bei einer abgewandelten Ausgestaltung können auch mehrere solcher Dichtelement 15 vorgesehen sein, die beispielsweise parallel zueinander in jeder der Aussparungen 11, 12 zusammen angeordnet sind. Denkbar ist auch eine Ausgestaltung mit parallel zueinander geführten Aussparungen, insbesondere Nuten, für zwei oder mehr Dichtelemente. Ferner sind an den Wänden 5, 6, 7 Vertiefungen 13 (Fig. 2 und 7) vorgesehen, wobei exemplarisch die Vertiefung 13 der Wand 5 gekennzeichnet ist. Die Vertiefung 13 dient zum Einfügen des Bodenelements 4, wie es auch anhand Fig. 7 und 8 beschrieben ist.

In diesem Ausführungsbeispiel sind die mehreren Aussparungen 11, 12 der Dichtbereiche 8, 9, 10 der mehreren Wände 5, 6, 7 aneinander anschließend angeordnet, wobei ein einziges Dichtelement 15 in diese mehreren Aussparungen 11, 12 eingelegt ist. Bei einer abgewandelten Ausgestaltung können aber auch mehrere solcher Dichtelemente 15 vorgesehen sein, wobei beispielsweise in jede einzelne Aussparung 11, 12 der Dichtbereiche 8, 9, 10 genau ein Dichtelement 15 eingelegt ist.

In diesem Ausführungsbeispiel sind die Aussparungen 11, 12 der Dichtbereiche 8, 9, 10 der Wände 5, 6, 7 zumindest im Wesentlichen U-förmig angeordnet. Das einzige Dichtelement 15 ist zumindest im Wesentlichen U-förmig in diese Aussparungen 11, 12 der Dichtbereiche 8, 9, 10 eingelegt.

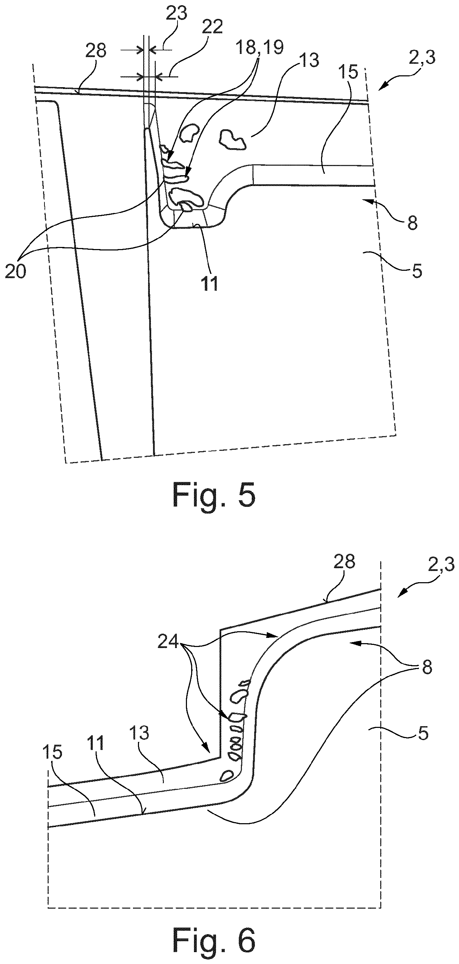

Fig. 2 zeigt den in Fig. 1 mit II bezeichneten Ausschnitt der Nasszelleneinrichtung 3 im Detail, wobei die Aussparung 11 der Wand 5 gezeigt ist. An einem Ende 18 weist die Aussparung 11 einen L-förmigen ausgestalteten Abschluss 19 auf. Das Dichtelement 15, das in diese Aussparung 11 eingelegt ist, weist einen L-förmige ausgestalteten Endabschnitt 20 auf, der in den L-förmig ausgestalteten Abschluss 19 der Aussparung 11 eingelegt ist, wie es auch anhand Fig. 5 beschrieben ist.

Fig. 3 zeigt die in Fig. 1 dargestellte Nasszelleneinrichtung 3. In die U-förmig angeordneten Wände 5, 6, 7 ist das Bodenelement 4 eingefügt. In diesem Ausführungsbeispiel ist das Bodenelement 4 als Duschwanne 4 ausgebildet. Hierbei ist die Abdichtung zwischen den Wänden 5, 6, 7 und dem montierten Bodenelement 4 realisiert, wie es auch anhand Fig. 7 und 8 beschrieben ist.

Fig. 4 zeigt die in Fig. 3 dargestellte Nasszelleneinrichtung 3, wobei zusätzlich zu dem als Duschwanne 4 ausgebildeten Bodenelement 4 ein Kabinenboden 21 montiert ist. Der Kabinenboden 21 ist ein Duschkabinenboden (Duschraumboden) 21. Bei einer abgewandelten Ausgestaltung kann der Kabinenboden 21 auch als Nasszellenboden oder dergleichen ausgebildet sein. Ferner kann ein weiterer Nasszellenboden vorgesehen sein. Insbesondere kann die Nasszelleneinrichtung 3 als modulare Einheit dienen, die in das Freizeitfahrzeug 1 eingebaut werden kann. Die Nasszelleneinrichtung 3 kann dadurch gegebenenfalls auch unabhängig von einem Freizeitfahrzeug 1 hergestellt und vertrieben werden.

Fig. 5 zeigt den in Fig. 2 gezeigten Ausschnitt, wobei das Dichtelement 15 in die Aussparung 11 der Wand 5 eingelegt ist. Hierbei ist das Dichtelement 15 an seinem Endabschnitt 20 L-förmig gebogen in die dort ebenfalls L-förmig ausgestaltete Aussparung 11 eingelegt. Ferner ist das Dichtelement 15 so in die Aussparung 11 eingelegt, dass es im entspannten Zustand vor der Montage teilweise aus der Aussparung 11 ragt. Hierbei ist eine Höhe 22 des Dichtelements 15 größer als eine Tiefe 23 der Aussparung 11 im Dichtbereich 8. Dies gilt entsprechend für die Dichtbereiche 9, 10. Die Form des Dichtelements 15 kann hierbei in weitgehend beliebiger Weise an die lokalen Anforderungen, insbesondere an die Form des Bodenelements 4, angepasst werden.

Fig. 6 zeigt den in Fig. 1 mit VI bezeichneten Ausschnitt des Dichtbereichs 8 der Wand 5, wobei das Dichtelement 15 in die Aussparung 11 im Dichtbereich 8 der Wand 5 eingelegt ist. Hierbei ist über die Z-Förmige Ausgestaltung 24 eine lokale Anpassung an die Geometrie des Bodenelements 4 möglich.

Fig. 7 zeigt einen auszugsweisen Schnitt durch eine Wand 5 der in Fig. 2 gezeigten Nasszelleneinrichtung 3 entlang der mit VII bezeichneten Schnittebene, wobei die Vertiefung 13, in die das Bodenelement 4 nach der Montage eingesetzt ist (Fig. 8), und die Aussparung 11, in die das Dichtelement 8 einlegbar ist, dargestellt sind. Die Aussparung ist zu der Vertiefung 13 hin geöffnet. In diesem Ausführungsbeispiel ist die Aussparung 11 im montierten Zustand der Nasszelle 2 nach unten hin geöffnet. Die Vertiefung 13 ist nach innen hin geöffnet. Diese Ausgestaltung ist in entsprechender Weise bei den Wänden 6, 7 realisiert.

Fig. 8 zeigt eine auszugsweise, schematische Darstellung der Abdichtung zwischen der Wand 5 und dem Bodenelement 4 entsprechend der in Fig. 7 gezeigten Ansicht im montierten Zustand, wobei unter anderem die Wand 5, das Bodenelement 4 und das eingelegte Dichtelement 15 in einer geschnittenen Darstellung gezeigt sind. Das Dichtelement 15 ist in dem dargestellten montierten Zustand einerseits in die Aussparung 11 eingefügt. Andererseits liegt das Dichtelement 15 an einer Seite 25 des Bodenelements 4 an.

Das Bodenelement 4 ist mit seinem Rand 26 in die Vertiefung 13 der Wand 5 eingesetzt. Die Seite 25 am Rand 26 des Bodenelements 4 ist die Oberseite 25 des Randes 26 beziehungsweise des Bodenelements 4. Hierbei wirkt die Gewichtskraft der Wand 5 so, dass die Vorspannung des eingebauten Dichtelements 15 erhalten bleibt. Somit wird die Funktionsfähigkeit der Abdichtung unterstützt und über die Lebensdauer aufrecht erhalten. Das Bodenelement 4 wird unten von dem Duschkabinenboden 21 abgestützt. Ferner ist die Wand 5 mittels geeigneter Befestigungsmittel 31, insbesondere Schrauben 31, mit dem Duschkabinenboden 21 verbunden, wobei exemplarisch die Schraube 31 dargestellt ist.

Die Wände 5, 6, 7 und das Bodenelement 15 sind auf diese Weise lösbar miteinander verbunden. Der Rand 26 des Bodenelements 4 ist in eine von mehreren Dichtbereichen 8, 9, 10 mehrerer Wände 5, 6, 7 gebildete Umfassung 27 eingesetzt, die in diesem Ausführungsbeispiel durch die Vertiefungen 13 der Wände 5, 6, 7 gebildet ist. Die Aussparungen 11, 12 der Wände 5, 6, 7 sind zu Stirnseiten 28, 29, 30 dieser Wände 8, 9, 10 hin geöffnet ist.

Fig. 9 zeigt das Freizeitfahrzeug 1 in einer schematischen, teilweise geöffneten Seitenansicht zur Veranschaulichung einer möglichen Anordnung der Nasszelleneinrichtung 3 in einem Innenraum 32 des Freizeitfahrzeugs 1. Die Nasszelleneinrichtung 3 ist als Duscheinrichtung 35 ausgebildet. Ferner kann eine Nasszelle 2 vorgesehen sein, die einen Nasszellenboden 36 aufweist. Je nach Ausgestaltung kann die Nasszelleneinrichtung 3 beispielsweise mit ihrem Duschkabinenboden 21 auf den Nasszellenboden 36 gestellt werden.

Die Erfindung ist nicht auf die beschriebenen Ausführungsformen beschränkt.

## Patentansprüche

1. Nasszelleneinrichtung (3) für ein Freizeitfahrzeug (1), wobei ein Bodenelement (4) und zumindest eine Wand (5, 6, 7) mit zumindest einem Dichtbereich (8, 9, 10) vorgesehen sind und wobei zwischen dem zumindest einen Dichtbereich (8, 9, 10) der zumindest einen Wand (5, 6, 7) und dem Bodenelement (4) eine Abdichtung vorgesehen ist,
**dadurch gekennzeichnet,**
**dass** in dem zumindest einen Dichtbereich (8, 9, 10) der zumindest einen Wand (5, 6, 7) und/oder in dem zumindest einem Bodenelement (4) zumindest eine Aussparung (11, 12) ausgestaltet ist, dass in die zumindest eine Aussparung (11, 12) zumindest ein Dichtelement (15) eingelegt ist und dass die Abdichtung zwischen dem zumindest einen Dichtbereich (8, 9, 10) der zumindest einen Wand (5, 6, 7) und dem Bodenelement (4) zumindest im Wesentlichen durch das zumindest eine Dichtelement (15) gebildet ist.

2. Nasszelleneinrichtung nach Anspruch 1,
**dadurch gekennzeichnet,**
**dass** mehrere Aussparungen (11, 12) der Dichtbereiche (8, 9, 10) mehrerer Wände (5, 6, 7) aneinander anschließend angeordnet sind und dass ein Dichtelement (15) in diese mehreren Aussparungen (11, 12) eingelegt ist.

3. Nasszelleneinrichtung nach Anspruch 1 oder 2,
**dadurch gekennzeichnet,**
**dass** die Aussparungen (11, 12) der Dichtbereiche (8, 9, 10) mehrerer Wände (5, 6, 7) zumindest im Wesentlichen U-förmig angeordnet sind und dass das Dichtelement (15) zumindest im Wesentlichen U-förmig in diese Aussparungen (11, 12) eingelegt ist.

4. Nasszelleneinrichtung nach einem der Ansprüche 1 bis 3,
**dadurch gekennzeichnet,**
**dass** an zumindest einem Ende (18) zumindest einer Aussparung (11) diese Aussparung (11) einen L-förmigen ausgestalteten Abschluss (19) aufweist und dass das Dichtelement (15), das in diese Aussparung (11) eingelegt ist, einen L-förmige ausgestalteten Endabschnitt (20) aufweist, der in den L-förmig ausgestalteten Abschluss (19) der Aussparung (11) eingelegt ist.

5. Nasszelleneinrichtung nach einem der Ansprüche 1 bis 4,
**dadurch gekennzeichnet,**
**dass** zumindest ein Dichtelement (15), das in eine Aussparung (11, 12) eingelegt ist, so in diese Aussparung (11, 12) eingelegt ist, dass es zumindest im entspannten Zustand des Dichtelements (15) teilweise aus dieser Aussparung (11, 12) ragt.

6. Nasszelleneinrichtung nach einem der Ansprüche 1 bis 5,
**dadurch gekennzeichnet,**
**dass** das Bodenelement (4) zumindest teilweise als Duschwanne ausgebildet ist.

7. Nasszelleneinrichtung nach einem der Ansprüche 1 bis 6,
**dadurch gekennzeichnet,**
**dass** das Dichtelement (15) im montierten Zustand einerseits zumindest im Wesentlichen in die zumindest eine Aussparung (11, 12) eingefügt und andererseits an einer Seite (25) des Bodenelements (4) anliegt.

8. Nasszelleneinrichtung nach einem der Ansprüche 1 bis 7,
**dadurch gekennzeichnet,**
**dass** die zumindest eine Wand (5, 6, 7) und das Bodenelement (15) miteinander verbunden, insbesondere lösbar miteinander verbunden, sind und/oder dass ein Rand (26) des Bodenelements (4) zumindest teilweise in eine von mehreren Dichtbereichen (8, 9, 10) mehrerer Wände (5, 6, 7) gebildete Umfassung (27) eingesetzt ist und/oder dass zumindest eine Aussparung (11, 12) einer Wand (5, 6, 7) zu einer Stirnseite (28, 29, 30) dieser Wand (8, 9, 10) hin geöffnet ist.

9. Nasszelleneinrichtung nach einem der Ansprüche 1 bis 8,
**dadurch gekennzeichnet,**
**dass** die Nasszelleneinrichtung als Teil einer Nasszelle (2) ausgebildet ist und/oder dass die Nasszelleneinrichtung als Duscheinrichtung (35) ausgebildet ist und/oder dass die Nasszelleneinrichtung zumindest teilweise zumindest eine Wand (11) und einen Nasszellenboden (36) einer Nasszelle (2) ausgebildet.

10. Freizeitfahrzeug (1), insbesondere Wohnmobil oder Wohnwagen, mit zumindest einer Nasszelleneinrichtung (3) nach einem der Ansprüche 1 bis 9.
